# EUROPEAN PATENT APPLICATION

(11) **EP 3 608 865 A1**
(43) Date of publication of application: **12.02.2020**
(21) Application number: 19190562.9
(22) Date of filing: 07.08.2019
(51) Int. Cl.: G06Q 30/06

(54) **A SHOEMAKING METHOD AND A SHOEMAKING SYSTEM**

(30) Priority: 07.08.2018 CN 201810890076
(71) Applicant: Qingyuan Global Technology Services Ltd., Qingyuan City, Guangdong 51180 (CN)
(72) Inventor: LUH, Yih-Ping, 104 Taipei City (TW)
(74) Representative: dompatent von Kreisler Selting Werner - Partnerschaft von Patent- und Rechtsanwälten mbB

(57) **Abstract**

The present disclosure relates to a shoemaking method and a shoemaking system, wherein the shoe design data is obtained from a user through the Internet or Internet of Things, and the purchase data is provided to the user according to the shoe design data. When an order data is obtained from the user, at least one pair of designed shoes is produced according to the shoe design data. The present method provides a tracking tag for the designed shoes. The tracking tag corresponds to tracking information. When the tracking tag is scanned by the scanning device connected to the Internet or Internet of Things, the scanning device uploads the tracking information through the Internet or Internet of Things.

## Description

### BACKGROUND OF THE INVENTION

### 1. Field of the Invention

The present disclosure relates to a production method and a production system; in particular, it relates to a shoemaking method and a shoemaking system.

### 2. Description of the Prior Art

Along with the development of technology, automation is becoming a trend in each industry. In the past, shoemaking was mainly conducted manually. But now there are automation companies which have developed machines that can produce shoes automatically. Through, for example, an automatic device such as a machine arm and the generation of a three-dimensional visual path, the making and assembling of shoes may also be completed by the support of an automatic device, and the effectiveness of shoemaking is enhanced by automatic coating and applying the adhesive.

However, how to automate the ordering system on the user end is a problem to be solved in this field.

### SUMMARY OF THE INVENTION

The shoemaking method and the shoemaking system according to the present disclosure may provide each customer with an automatic and customized shoemaking service.

The shoemaking method of the present disclosure obtains the shoe design data from a user through the Internet or Internet of Things, and provides the purchase data to users according to the shoe design data .When the order data is obtained by the user, at least one pair of the designed shoes is produced according to the shoe design data . The present method provides the designed shoes with a tracking tag. The tracking tag corresponds to the tracking information. When the tracking tag is scanned by the scanning device connected to Internet or Internet of Things, the scanning device uploads the tracking information through the Internet or Internet of Things.

In an embodiment of the present disclosure, wherein the tracking tag includes a barcode data or a radio frequency identification element (RFID), the barcode data or the radio frequency identification element corresponds to the tracking information.

In an embodiment of the present disclosure, the purchase data includes an estimated fee of production and an estimated time of production.

In an embodiment of the present disclosure, the step of providing the estimated fee of production and the estimated time of production includes:

Calculating the estimated time of production of the shoe design data based on the material quantity in the stock database.

In an embodiment of the present disclosure, the purchase data includes a production fee of group purchase, a production quantity of group purchase and a production time of group purchase;

The step of obtaining the order data from the user includes:

Obtaining a confirmation message of group purchase from the user;

The shoe design data is uploaded to the digital tally platform. The digital tally platform gathers an order quantity from the user and from at least one participant;

When the order quantity meets the production quantity of group purchase, the order data is provided, and the designed shoes are produced according to the order quantity.

In an embodiment of the present disclosure, the digital tally platform is a social networking site or a group purchase website.

In an embodiment of the present disclosure, before the user provides the shoe design data, it further includes: displaying a try-on image to the user by a virtual display device, where the try-on image corresponds to the shoes design data.

In an embodiment of the present disclosure, the shoe design data includes upper data, sole data and shoesize data.

In an embodiment of the present disclosure, after the step of obtaining the shoe design data, it further includes:

Comparing the shoe design data to the data of a plurality of existing shoes in a shoes database;

When the shoes design data is similar to the data of at least one of the existing shoes, the data of the existing shoes is provided to the user;

After the order data is obtained from the user, at least one pair of the designed shoes is produced according to the data of the existing shoes.

The shoemaking system of the present disclosure includes a communication unit, a processing unit, a storage unit, a purchase data and a shoemaking device, wherein the communication unit obtains the shoe design data from a user through the Internet or Internet of Things; the processing unit is connected to the communication unit; the storage unit, the processing unit generating an order data according to the shoes design data and the shoes database in the storage unit, the purchase data is provided to the user through the communication unit;

the shoemaking device is connected to the processing unit. When the communication unit obtains an order data from the user, the processing unit transmits the shoe design data to the shoemaking device; the shoemaking device produces at least one pair of the designed shoes according to the shoe design data, and the processing unit generates a tracking tag corresponding to the designed shoes, where the tracking tag corresponds to a tracking information.

When the user receives the pair of designed shoes and scans the tracking tag with the scanning device and uploads the tracking information, the communication unit obtains the tracking information.

In an embodiment of the present disclosure, the tracking tag include barcode data or radio frequency identification element (RFID),the barcode data or the radio frequency identification element correspond to the tracking information.

In an embodiment of the present disclosure, the purchase data includes an estimated fee of production and an estimated time of production.

In an embodiment of the present disclosure, the processing unit calculates the estimated time of production of the shoe design data based on the material quantity in the stock database.

In an embodiment of the present disclosure, the purchase data includes a production fee of group purchase, a production quantity of group purchase and a production time of group purchase. The communication unit obtains a confirmation message of group purchase from the user; the shoe design data is uploaded to a digital tally platform by the processing unit through the communication unit; the digital tally platform gathers the order quantities from the user and at least one participant; when the order quantity meets the production quantity of group purchase, the processing unit provides the order quantity and the designed shoes data to the shoemaking device according to the order data; the shoemaking device produces the designed shoes according to the designed shoes data and the order quantity.

In an embodiment of the present disclosure, the digital tally platform is a social networking site or a group purchase website.

In an embodiment of the present disclosure, the shoemaking system further includes a virtual device, which displays a try-on image to the user, where the try-on image corresponds to the shoe design data.

In an embodiment of the present disclosure, the shoe design data includes an upper data, a sole data and a shoesize data.

In an embodiment of the present disclosure, when the processing unit obtains the shoe design data, the processing unit compares the shoe design data to the data of a plurality of existing shoes in the shoes database of the storage unit. When the shoe design data is similar to the data of the at least one of the existing shoes, the processing unit provides the data of the existing shoes to the user through the communication unit. After obtaining the order data from the user, the shoemaking device produces at least one pair of designed shoes according to the data of the existing shoes.

As mentioned above, the shoemaking method and the shoemaking system according to the present disclosure may produce at least one pair of the designed shoes according to the shoe design data from the user, and may track the products after producing the shoes to ensure that the user obtains the designed shoes ordered by him/her.

### BRIEF DESCRIPTION OF THE DRAWINGS

FIG. 1 is a diagram of the shoemaking system in the first embodiment of the present disclosure;
FIG. 2 is a flowchart of the shoemaking method in the first embodiment of the present disclosure;
FIG. 3 a flowchart of the shoemaking method in the second embodiment of the present disclosure;
FIG. 4 is a flowchart of the shoemaking method in the third embodiment of the present disclosure;
FIG. 5 is a diagram of a device of the shoemaking system in the first embodiment of the present disclosure;
FIG. 6 is a side diagram of the first pickup device in the first embodiment of the present disclosure;
FIG. 7 is a diagram of a device of the shoemaking system in the fourth embodiment of the present disclosure;
FIG. 8 is a diagram of the heating device, the cooling device and the cleaning device in the fourth embodiment of the present disclosure;
FIG. 9A is a vertical diagram of the upper in the embodiment of the present disclosure;
FIG. 9B is a diagram of the three-dimensional structure data of the upper of FIG. 9A;
FIG. 10A and FIG. 10B are diagrams of the coating device coating a surface in the first embodiment of the present disclosure;
FIG. 11 is a diagram of the three-dimensional structure data and the coating path in an embodiment of the present disclosure.

### DETAILED DESCRIPTION OF THE PREFERRED EMBODIMENT

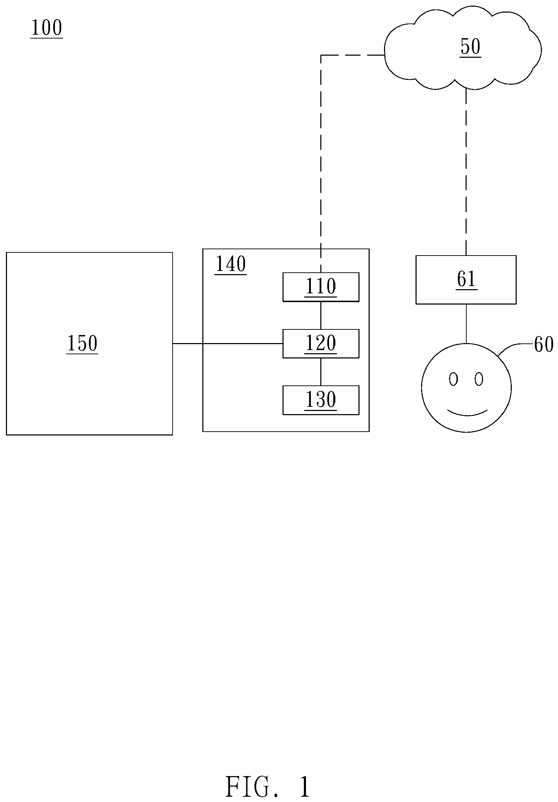

FIG. 1 is a diagram of the shoemaking system in the first embodiment of the present disclosure. Please refer to FIG. 1. In the first embodiment of the present disclosure, a shoemaking system 100 includes a communication unit 110, a processing unit 120 and a storage unit 130. The communication unit 110, for example, may be a Network Interface Controller (NIC), a network interface card or a LAN adapter, and the present disclosure isn't limited thereto. The communication unit 110 in the present embodiment is preferably a network card of a server. The processing unit 120, for example, may be a Central Processing Unit (CPU), a Micro Processing Unit (MPU) or a Micro Control Unit (MCU), etc., but the present disclosure isn't limited thereto. The storage unit 130, for example, may be any type of fixed or mobile Random Access Memory (RAM), Read-Only Memory (ROM), Flash Memory, Hard Disk Drive (HDD) or the like or a combinations thereof.

In particular, in the present embodiment, the communication unit 110, the processing unit 120 and the storage unit 130, for example, may be implemented with the network card, CPU, RAM and HDD in the server 140, but the present disclosure isn't limited thereto, but the abovementioned elements are taken as examples to describe the technical features of the present embodiment in the following. The processing unit 120 is connected to the communication unit 110 and the storage unit 130, and the communication unit 110 may be connected to Internet 50 or Internet of Things (loT).

The server 140 in the present embodiment, for example, may be a webpage server or a file server, providing an operation interface to a user 60 through the Internet 50. The operation interface, for example, may be a webpage provided in the Internet 50, allowing the user 60 to use it through an electronicic device 61 such as various types of computers or smartphones, or may bea program operation interface provided by an application, but the present disclosure isn't limited thereto. When the user 60 previews the abovementioned webpage or uses the abovementioned application, shoe design data is generated.

In the shoemaking system 100 in the present embodiment, the abovementioned operation interface provides a plurality of upper data, shoelace data, tongue data, toe data, insole data or sole data, and further includes shoesize data, shoe style data or material data, etc., which may be selected by the user 60, but the present disclosure isn't limited thereto. The user 60 generates shoe design data based on the abovementioned data, and the shoe design data includes the abovementioned data selected by the user.

The following uses the upper data, the sole data and the shoesize data as examples. For example, in the present embodiment, the server 140 provides the sole data and the insole data of a plurality of different styles for the user 60's selection through the Internet 50, and the shoe design data, including the upper data and the sole data may be generated immediately after the user 60 selects a specific combination according to the his/her requirements.

The storage unit 130 in the present embodiment stores at least one of the shoes database. The shoes database includes the material quantity of the upper material of each shoe style and each size, and the material quantity of the sole material of each style and each size, as well as the cost of each material. In another embodiment, the shoes database may further include stock data of other materials such as the shoelace, the tongue, the toe, and the insole, but the present disclosure isn't limited thereto. The communication unit 110 of the shoemaking system 100 in the first embodiment of the present disclosure obtains the shoe design data of the user 60 through the Internet 50, and the processing unit 120 obtains the shoe design data from the communication unit 110, then the purchase data is generated according to the shoes database in the storage unit 130. In particular, the processing unit 120 calculates how long it takes to produce the shoes according to the shoe design data of the user 60 with the stock amounts of the upper and the soles in the shoes database. At the same time, the production cost is calculated according to the cost data of each meterial. The purchase data includes the data about production time and production cost, and the data is provided to the electronicic device 61 of the user 60 through the communication unit 110.

The user 60 may decide whether or not to produce the shoes corresponding to the shoe design data according to the purchase data feedback from the electronic device 61 of the user 60. When the user 60 has confirmed to purchase the shoes, the shoemaking system 100 lets the user 60 submit order data through the operation interface provided by the Internet 50. When the shoemaking system 100 can obtain the order data through the communication unit 110, the processing unit 120 may conduct the command of shoemaking immediately.

The shoemaking system in the present embodiment further includes a shoemaking device 150, and the shoemaking device 150 is connected to the processing unit 120. According to the order data from the communication unit 110, the processing unit 120 will transmit the shoes design data to the shoemaking device 150. The shoemaking device 150 can obtain a corresponded upper material according to the upper data in the shoes design data and obtain the corresponded sole material according to the sole data in the shoes design data, and a pair of shoes designed corresponding to the shoes design data is produced based on the upper material and the sole material. At the same time, the processing unit 120 generates a tracking tag corresponding to the pair of designed shoes. The tracking tag may be printed on an entity label, a package box, a receipt, or a shipping label, and the present disclosure isn't limited thereto. The tracking tag corresponds to a tracking information. When the shoemaking device 150 completes producing the designed shoes, the tracking tag may be sent to the user 60 at the same time. When the user 60 receives the designed shoes and the tracking tag is scanned by a scanning device, the tracking information may be sent back to the shoemaking system 100 through the Internet 50 to complete the purchase of the designed shoes. In short, the electronic device 61 of the present embodiment may provide a customized shoemaking service, completing producing each of the different designed shoes according to the requests of different users, and automatically completing the purchase of the designed shoes through the Internet at the same time.

In particular, the abovementioned tracking tag, for example, may be barcode data, preferably 2D barcode which can include more information, and the abovementioned 2D barcode includes the tracking information corresponding to the abovementioned designed shoes. When the user 60 obtains the tracking tag, for example, through the electronic device 61 such as a smartphone, the tracking information corresponding to the tracking tag may be generated immediately through an application with a code reader, and the tracking information is transmitted to the shoemaking system 100 through the Internet 50 to allow the shoemaking system 100 to ensure that the designed shoes produced by the shoemaking system 100 has been transported.

The tracking tag of the present disclosure isn't limited to the abovementioned barcode data. In another embodiment, the tracking tag may be a radio frequency identification element (RFID), and the abovementioned user 60 transmitting the shoe design data and the order data through the operation interface provided by the shoemaking system 100 in the Internet 50 may be a shop vender, for example. When the shop vender receives the designed shoes produced using the shoe design data transmitted by the shop vender, the tracking information corresponding to the radio frequency identification element may be obtained by scanning the Radio Frequency Identification device, and the tracking information can be transmitted through the Internet as a receipt message.

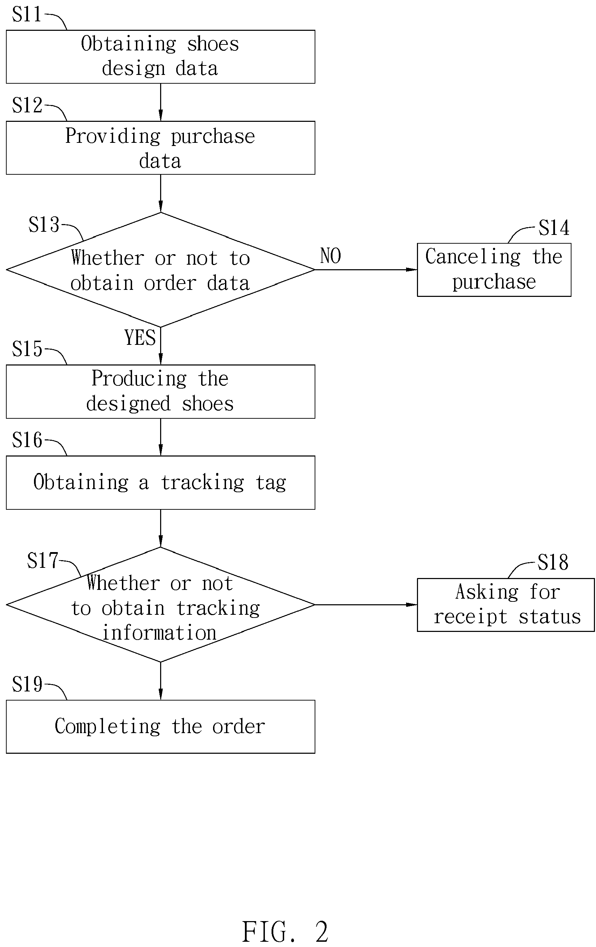

FIG. 2 is a flowchart of the shoemaking method in the first embodiment of the present disclosure. In the following sentences, the shoemaking method is integrally described by referring to the component label in FIG. 1, which isn't intended to limit the shoemaking method to the embodiments of the present disclosure. Please refer to FIG. 2. As mentioned above, the shoemaking method used in the shoemaking system 100 in the first embodiment of the present disclosure begins with the user 60 outputting the shoe design data through the abovementioned webpage interface or the software interface. When the abovementioned shoemaking system 100 obtains the shoe design data from the user 60 (Step S11), the shoemaking system 100 can then generate the purchase data according to the shoe design data (Step S12). Furthermore, before the user 60 decides the shoe design data and after the user 60 selects the upper data and the sole data by operating the webpage, the abovementioned shoemaking system 100 can present a virtual image of the completed design on the webpage as a preview image of the completed design according to the combination of the upper data and the sole data to assist the user 60 to make the required shoe design data.

However, the present disclosure isn't limited to the abovementioned preview mode of the electronic device 61 such as a desktop computer, a notebook computer or a tablet computer. In another embodiment of the present disclosure, the electronic device 61 used by the user 60, for example, may be a smartphone, a tablet computer, or a notebook computer with camera function, or a desktop computer or a smart Television connected to a camera device, then the shoemaking system 100 in the present embodiment of the present disclosure may further include a virtual device. The virtual device, for example, may be implemented by applications on the electronic device 61 used by the user 60. Preferably, the shoemaking system 100 lets the user 60 first download applications through the communication unit 110. The user 60 may generate a try-on image through the electronic device 61 and the image of foot and the shoe desgin data captured by the electronic device 61. In other words, the shoemaking system 100 in another embodiment of the present disclosure may further provide a preview image to the user 60 by Augmented Reality (AR).

In the present embodiment, after providing the purchase data (Step S12) to the user, the shoemaking system 100 asks the user whether or not to produce the designed shoes corresponding to the purchase data through the communication unit 110 (Step S13). If the user submits a negative answer, the shoemaking system 100 immediately stops producing the shoes according to the shoe design data at this time (Step S14).

After the shoemaking system 100 receives the order data (Step S13), the shoemaking system 100 begins to produce the shoes based on the shoe design data through the shoemaking device 150 (Step S15). The shoemaking device 150 uses the upper material and the sole material selected from the shoe design data to produce the designed shoes. At the same time while the designed shoes are produced, the shoemaking method in the present embodiment further generates a tracking tag for each pair of the shoes (Step S16). After producing the shoes, the abovementioned tracking tag is sent to the user together with the designed shoes. The shoemaking system 100 may wait for the tracking information corresponding to the tracking tag in a default time (Step S17). The default time, for example, may be three days after shipping, a week after shipping, etc, determined by the time required for delivery. After the default time is passed, if the shoemaking system 100 hasn't received the tracking information yet, then the shoemaking system may further submit a message to the user to ask for receipt status (Step S18) to ensure that the user indeed receives the designed shoes purchased by the user.

After the shoemaking system 100 receives the tracking information, the order may be completed immediately (Step S19). Through the abovementioned shoemaking method in the present embodiment, the process of user purchasing the shoes may be completed by an automatic service. At the same time, it can be ensured that the user receives the designed shoes purchased by the user, so that a more perfect shoes purchase service is provided.

On the other hand, the shoemaking system and the shoemaking method according to the present disclosure not only may produce the designed shoes by the abovementioned specialized and customized method, but also may provide purchase services to a plurality of users such as group purchase or crowd funding. In another embodiment, the purchase data, for example, includes an estimated fee of production and an estimated time of production. But the purchase data may further include a production fee for group purchase, a production quantity for group purchase, and a production time for group purchase.

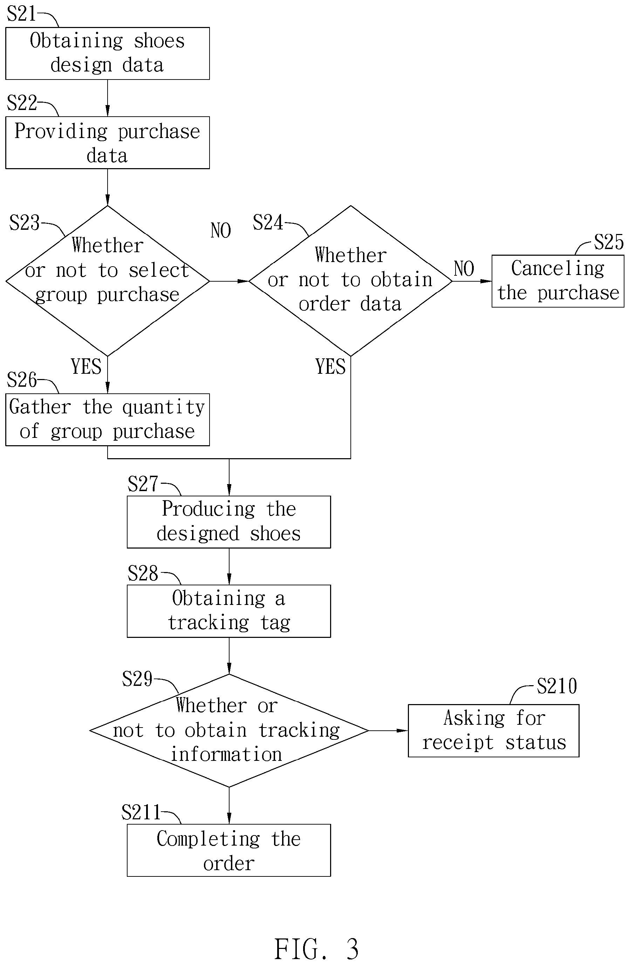

FIG. 3 is a flowchart of the shoemaking method in the second embodiment of the present disclosure. Please refer to FIG. 3. In the second embodiment of the present disclosure, the user first provides the shoe design data (Step S21), and the purchase data is provided according to the shoes design data (Step S22). In addition to the estimated fee of production and the estimated time of production calculated according to the stock amount and cost of the sole material and the stock amount and cost of the upper material, the production fee of group purchase and the production time of group purchase calculated by larger quantity of the group purchase may also be added to the purchase data and integrally provided to the user; that is, a providable discounted price is calculated based on the larger quantity and is integrally provided to the users with the purchase data as a reference.

In the present embodiment, the production fee of group purchase may be calculated by a quantity of group purchase, or by a plurality of quantities of group purchase of different ranges, where the corresponding production fee of group purchase is calculated according to the different quantities of group purchase. The present disclosure isn't limited to the method of data presentation for the production fee and the production quantity of group purchase in the purchase data.

Please refer to FIG. 3. The shoemaking system in the present embodiment, after providing the purchase data to the user (Step S22), may first ask the user, for example, through the operation interface of the webpage or the application whether or not the user would like to make a group purchase (Step S23). If the user submits the command of denying, the shoemaking system asks the user whether or not the shoes need to be produced by a specialized or customized method (Step S24). If the user submits the command of denying production again, then the shoemaking method used in the shoemaking system in the present embodiment may stop the process of purchasing and shoemaking according to the shoes design data immediately (Step S25). If the user just needs to produce an individual quantity of shoes that is required for the user by the specialized or customized method, the order data may be submit immediately to make the shoemaking system produce the designed shoes (Step S27).

When the shoemaking system in the present embodiment receives the command from the user to confirm production, the shoemaking system begins to gather the quantity for group purchase openly (Step S26). In particular, the shoemaking system in the present embodiment uploads the shoes design data to a digital tally platform. The digital tally platform, for example, may be a social networking site or a group purchase website, and the digital tally platform lets other users or browsing users select whether or not to join in the group purchase through the social networking site or the group purchase website. In the step S26 of gathering quantities of group purchase, the shoemaking system may produce the designed shoes immediately after the quantity of group purchase achieves a default quantity (Step S27). The quantities of group purchase may be gathered by setting a regular tally time. The designed shoes are produced according to the final tally quantity, but the present disclosure isn't limited thereto.

After completing the step S27 of producing the designed shoes, the shoemaking system in the present embodiment generates a tracking tag corresponding to each pair of shoes (Step S28), and confirms whether or not to receive the tracking information generated by the tracking tag corresponding to the purchased shoes (Step S29). If the tracking information hasn't been received, the receipt status corresponding to the buyer is asked immediately (Step S210). If the tracking information is received, the order corresponding to the designed shoes may be completed immediately (Step S211).

Through the abovementioned shoemaking method in the present embodiment, when the user selects the method of group purchase, as the quantity of group purchase is increased, the production fee of the designed shoes is then decreased, and the shoemaking system may calculate the corresponding discount value and the cost of production saved after mass production as a reference for the maker of the shoemaking system after gathering the quantities of group purchase(Step S26), but the present disclosure isn't limited thereto.

Based on the shoemaking system and the shoemaking method of the abovementioned embodiment, the shoemaking system and the shoemaking method according to the present disclosure not only may provide an automatic shoemaking method, but also may further provide a customized shoemaking service to the users. At the same time, when the users want to further reduce the price, a large lot of production may be achieved by group purchase or crowd funding to reduce the prices.

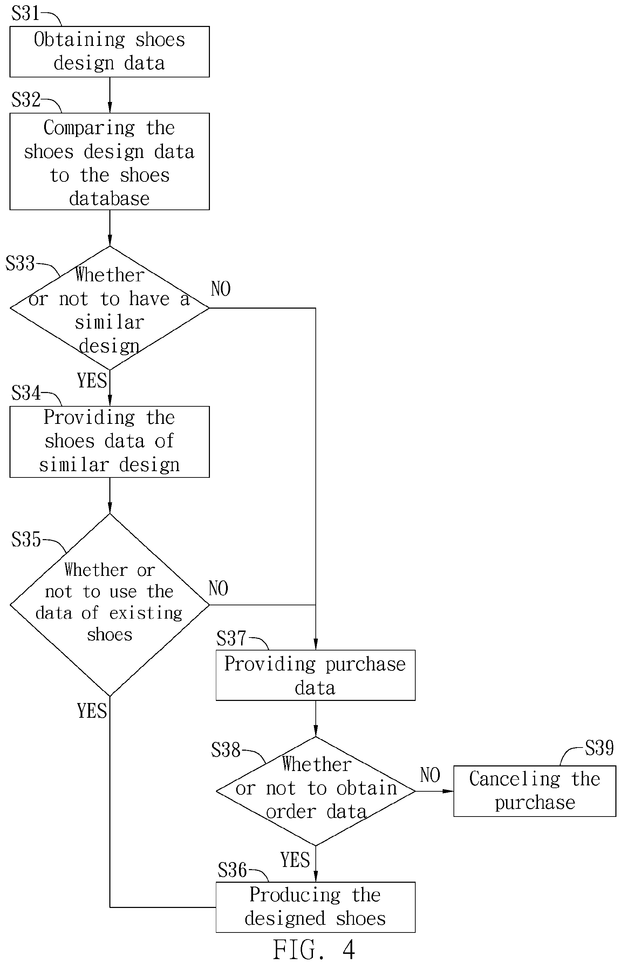

On the other hand, in another embodiment of the present disclosure, the shoemaking system may further compare the data of the existing shoes to the shoe design data. FIG. 4 is a flowchart of the shoemaking method in the third embodiment of the present embodiment. Please refer to FIG. 4. In the shoemaking method in the third embodiment of the present disclosure, after the shoemaking system obtains the shoe design data through the communication unit (Step S31), the shoe design data is compared to the data of a plurality of existing shoes in the shoes database (Step S32). For example, the shoemaking system searches whether there is a combination of the upper data and the sole data of these shoes data in the shoes database that is the same as or similar to the shoe design data (Step S33). If existing designed shoes similar to the shoe design data are found, a message is provided to the electronic device of the user through the communication unit to let the user reference the existing designed shoes (Step S34). Related information such as the production fee and the production time of the existing designed shoes are also provided at the same time, and the shoemaking system asks the user whether or not to produce the shoes based on the existing designed shoes (Step S35). If the shoemaking system receives from the user a command to confirm production, the designed shoes may begin to be produced immediately (Step S36).

In the present embodiment, if there is no existing shoes data in the shoes database that is the same as or similar to the shoe design data provided by the user, or if the user chooses not to produce the designed shoes based on the data of the existing shoes, then the shoemaking system in the present embodiment provides the purchase data to the user as a reference (Step S37), and waits for the user to indicate whether or not to submit the order data (Step S38). If the user submits the command of denial, the purchase is canceled immediately (Step S39). If the user submits the order data, the designed shoes begins to be produced immediately (Step S36). As mentioned above, the shoemaking method and the shoemaking system in the embodiment of the present disclosure not only may produce the shoes according to the design request of each user, but also may compare the existing designed shoes with the products in the stock, and gives the user more selections. The speed of production and the delivery may be accelerated by having the existing designed shoes and the products in the stock, and the cost of production may be reduced to promote selling the products at the same time.

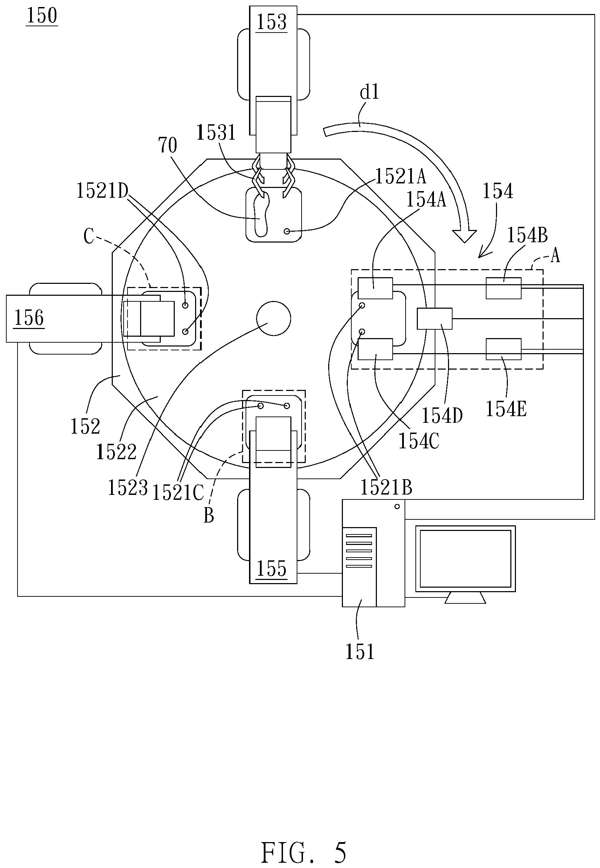

The shoemaking system in the above embodiment of the present disclosure are further described as follows. FIG. 5 is a detailed diagram of a shoe making device 150 in the first embodiment of the present disclosure. Please refer to FIG. 5. In the first embodiment of the present disclosure, the shoe making device 150 includes a processing unit 151, and a first conveying device 152 connected to the processing unit 151, a first pickup device 153, a scanning device 154, a first coating device 155, and a first applying device 156. In particular, the shoe making device 150, for example, may comprise a desktop computer or a notebook computer, configured to provide the operation interface, and the abovementioned processing unit 151, for example, may be implemented by a Central Processing Unit (CPU) of the desktop computer, but the present disclosure isn't limited thereto. The processing unit in the shoemaking system according to the embodiment of the present disclosure may be a Micro Processing Unit (MPU) or a Micro Control Unit (MCU) and the like.

In the first embodiment of the present disclosure the first conveying device152 includes supports 1521A, 1521B, 1521C, and 1521D. The supports, for example, may keep an upper 70 fixed on the first conveying device152. For example, the upper 70, for example may be fixed on a shoe last (not shown in FIG. 5). The support 1521A on the first conveying device 152, for example, may be inserted to a long pole of the mounting hole of the shoe last, but the present disclosure doesn't limit the types of the supports 1521A, 1521B, 1521 C, and 1521D. The first pickup device 153, for example, may be a robotic arm, preferably a robotic arm having at least four claws 1531, configured to fix the upper 70 and the shoe last appropriately. The first pickup device 153 may move the upper 70, for example, to the support 1521A of the first conveying device 152 from shelfs or display stands. The first conveying device 152 moves the upper on the support 1521A to the scanning area A of the scanning device 154.

The scanning device 154 in the present embodiment may scan an object in the scanning area A, and provide a three-dimensional structure data. In particular, the scanning device 154 of the present embodiment, for example, includes a plurality of image capture units 154A, 154B, 154C, 154D, and 154E. The plurality of image capture units 154A, 154B, 154C, 154D, and 154E, for example, may be cameras formed by image sensors such as Charged-Coupled Device (CCD), etc., and the plurality of image capture units 154A, 154B, 154C, 154D, and 154E respectively obtains an image of the object in the scanning area A from different angles. The scanning device 154, for example, further includes a plurality of light sources with different colors (not shown in FIG. 5). The image capture unit 154A, 154B, 154C, 154D, and 154E generate a three-dimensional structure data from captured images by providing lights of different colors. But the present disclosure is not limited by the image capture unit configured to capture images on a scanning device, nor is it limited by the number of the image capture units. On the other hand, the present disclosure is not limited by the method of capturing the image by a plurality of lights of different colors. It may further scan the object by laser of different patterns through Structured Light to obtain a three-dimensional structure data.

The abovementioned three-dimensional structure data, for example, includes surface shapes, outlines and depth data of the upper. After the processing unit 151 obtains three-dimensional structure data from the scanning device 154, a first coating path and a first applying path are decided by the three-dimensional structure data. The first coating path, for example, may be calculated according to the outline of the upper in the three-dimensional structure data, may be a path extending along the edge, may also be a path extending to outside along the center, and may further be a back and forth path covering the whole upper, but the present disclosure isn't limited thereto.

After the first conveying device 152 moves the upper 70 to the scanning area A and makes the processing unit 151 obtain the three-dimensional structure data, the first coating device 155 sprays a first treating agent to the upper 70 according to the first coating path decided by the processing unit 151. Then the first applying device 156 applies a first adhesive to the upper 70 according to the first applying path decided by the processing unit 151.

In the present embodiment, the abovementioned first treating agent, for example, may be a PU/PVC surface agent, a Plastic skin surface treating agent, an adhesive material treating agent, an EVA material treating agent, a TPR material agent, etc., used for increasing adhesive force and oleophobic, etc. But the present disclosure is not limited by the type of the first treating agent. The first adhesive, for example, may be a Polyurethane Resin, or other adhesive agents configured to bind the upper 70 and the sole, and the present disclosure is also not limited by the type of the adhesive agent. The first treating agent is suitable for use with the first adhesive together, so that the adhesive force between the upper 70 and the sole is increased. At the same time, the first coating path and the first applying path calculated from the three-dimensional structure data may automatically complete the coating process of the first treating agent and applying process of the first adhesive, so that the shoemaking effectiveness is increased.

As mentioned above, the shoe making device 150 in the first embodiment of the present disclosure may automatically complete scanning the upper, and the processes of spraying the first treating agent and applying the first adhesive to the upper are automatically planned based on the result of scanning. The whole process does not need to rely on any additional human manipulation, increasing the effectiveness of shoemaking substantially.

In particular, please refer to FIG. 5. The first conveying device152 of the first embodiment of the present disclosure includes a first plate 1522, the first supports 1521A, 1521B, 1521C and 1521D are disposed on the first plate 1522. The first plate 1522 is rotatable about the rotation axis 1523. The rotation axis 1523 of the present embodiment may allow the first plate 1522 to rotate about a direction d1, and make the first supports 1521A, 1521B, 1521C and 1521D movable from the first pickup device 153 to the scanning device 154, the first coating device 155 and the first applying device 156. In the present embodiment, the first plate 1522 provides a space on which the first supports 1521A, 1521B, 1521C and 1521D are disposed and substantially extends along a plane, and the rotation axis 1523 is perpendicular to the plate (that is, perpendicular to the paper surface shown in FIG. 5). The first conveying device152 moves the upper 70 by rotating the first plate 1522.

In particular, the first coating device 155 in the present embodiment may spray the first treating agent in a first coating area B; the first applying device 156 may apply the first adhesive in a first applying area C; the first coating area B and the first applying area C are distributed on the first plate 1522; the first plate 1522 sequentially move the first supports 1521A, 1521B, 1521C and 1521D to the scanning area A, the first coating area B and the first applying area C by rotating.

The present disclosure is not limited to the first conveying device 152 which moves the upper by rotating. In another embodiment, the first conveying device may also be implemented, for example, by a conveyor. The upper is moved to the scanning area and scanned after being obtained from the first pickup device. Then the upper is sequentially moved to the first coating device and the first applying device, but not limited thereto.

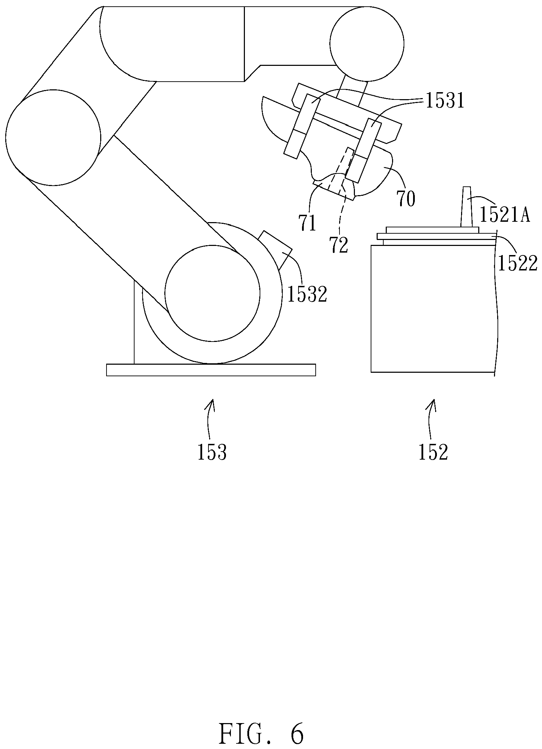

In the first embodiment of the present disclosure, the first pickup device 153 may further capture an image and decides the disposing position of the upper which is picked up by the first pickup device 153 according to the image. Please refer to a side view of the first pickup device 153 shown by FIG. 6, wherein the first pickup device 153 further includes the image capture unit 1532. When the upper 70 is set on the shoe last 71 and captured by the four claws 1531, the first pickup device 153 will first move the upper 70 and the shoe last 71 to allow the image capture unit 1532 to capture the image. The processing unit 151 may calculate the position of a mounting hole 72 of the shoe last 71 relative to the four claws 1531 according to the image captured by the image capture unit 1532, and provide a position command to the first pickup device 153. The first pickup device 153 makes the mounting hole of the shoe last 71 set on the upper 70 correspond to the first support 1521A according to the abovementioned position command, so that the upper 70 and the shoe last 71 may be disposed on the first support 1521A, and moved through the first plate 1522 of the first conveying device 152.

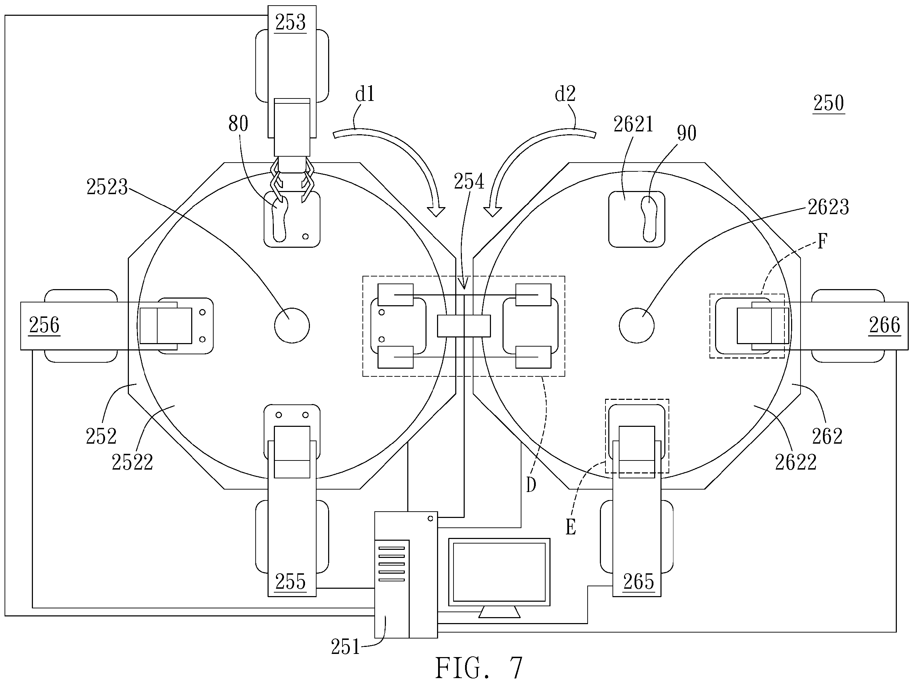

The shoemaking system of the present disclosure not only may automatically process the upper, but also further processes the sole automatically. FIG. 7 is a diagram of a device of the shoemaking system in the fourth embodiment of the present disclosure. Please refer to FIG. 7. In the fourth embodiment of the present disclosure, the shoemaking device 250, similar to the shoe making device 150, includes the processing unit 251, and the first conveying device 252 connected to the processing unit 251, the first pickup device 253, the scanning device 254, the first coating device 255 and the first applying device 256. The first conveying device 252 sequentially moves the upper 80 obtained from the first pickup device 253 to the scanning device 254, the first coating device 255 and the first applying device 256. The shoemaking device of the present embodiment further includes the second conveying device 262, the second coating device 265 and the second applying device 266. An operator, for example, may dispose the sole 90 on the second conveying device 262. The second conveying device 262 sequentially moves the sole 90 to the scanning device 254, the second coating device 265 and the second applying device 266.

When the sole 90 is moved to the scanning area D of the scanning device 254 by the second conveying device 262, the scanning device 254 scans the upper 90 to obtain three-dimensional structure data. The processing unit 251 decides a second coating path and a second applying path based on the three-dimensional structure data. When the second conveying device 262 moves the sole 90 to the second coating device 265, the second coating device 265 sprays the second treating agent to the sole 90 according to the second coating path; when the second conveying device 262 moves the sole 90 to the second applying device 266, the second applying device 266 applies the second adhesive to the sole 90 according to the second applying path. Through the first conveying device 252, the first coating device 255 and the first applying device 256, the upper 80 may be coated with the first adhesive. Through the second conveying device 262, the second coating device 265 and the second applying device 266, the sole 90 may be applied by the second adhesive. The upper 80 and the sole 90 may be combined by the first adhesive and the second adhesive.

In particular, the second conveying device 262 of the present embodiment further includes a second plate 2622. The second plate 2622 is configured to carry the sole, and the second plate 2622 in the present embodiment, for example, may further comprise a plate 2621. The sole 90 may be disposed on the plate 2621. The second plate 2622 substantially extends along a plane, and the second plate 2622 rotates about the rotation axis 2623 perpendicular to the plate. The second conveying device 262 moves the sole 90 by rotating the second plate 2622.

Furthermore, the first plate 2522 of the first conveying device 252 in the present embodiment is rotatable about the direction d1, and the second plate 2622 of the second conveying device 262 is rotatable about a direction d2. Thus the first conveying device 252 and the second conveying device 262 may move the upper 80 and the sole 90 to the scanning area D to be scanned together at the same time. As such, the three-dimensional structure data may include a three-dimensional structure corresponding to the upper 80 and the sole 90 at the same time.

Please refer to FIG. 7. On the other hand, the second coating device 265 may spray the second treating agent in the second coating area E. The second applying device 266 is configured to spray the second adhesive in the second applying area F. The second coating area E and the second applying area F are distributed on the second plate 2622, hence the second plate 2622 may immediately and sequentially moves the sole 90 to the scanning area D, the second coating area E, and the second applying area F by rotating.

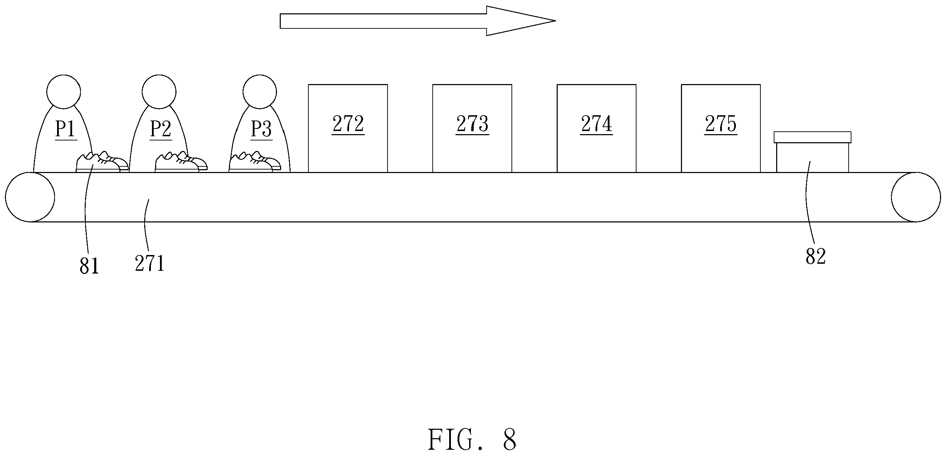

Please refer to FIG. 8. In the present embodiment, the abovementioned shoemaking device 250 further includes a heating device 272, a cooling device 273 and a cleaning device 274. After operators P1-P3 combine the upper 80 and the sole 90 to form a shoe 81, the shoe 81 is set on a conveyor 271. The heating device 272 heats the shoe 81, the cooling device273 cools the shoe 81 heated by the heating device 272, so that the connection between the upper 80 and the sole 90 is further enhanced. The cleaning device 274 further cleans the shoe 81 after the shoe 81 is cooled. The shoemaking device 250 may further comprise a packing device 275. The cleaned shoe 81 may form a product 82 through the packing device 275 to be prepared for shipment. As mentioned above, for example, the tracking tag may also be disposed on the product 82 in the packing device 275. The shoemaking device of the present embodiment 250 may further automatically complete producing the shoe 81 through the abovementioned device. However, the heating device, the cooling device, the cleaning device and the packing device may be disposed according to the needs, and the present disclosure isn't limited thereto.

As mentioned above, the shoe making device 150 and 250 in the embodiment of the present disclosure may automate the processing of the upper, and the needs for space is decreased. A plurality of shoemaking device 150 are set in a factory building as a plurality of working stations to enhance the efficiency of the shoemaking. The shoemaking device 250 may further process the sole, then the shoemaking process may be completed effectively by automation technologies. Thus, the shoe making device 150 may provide an automated process with further space saving.

In the following sentence, the scanning method and the coating method in the embodiment of the present disclosure are further described in detail according to the scanning device, the first coating device and the first coating path. The coating method and the coating device according to the present disclosure are not limited to the scanning devices 154 and 254, and the first coating devices 155 and 255, and the second coating device265. The coating method according to the present disclosure may further be applied to the independently disposed scanning device and coating device, and may further be the scanning device and the coating device integrally disposed with another device, the present disclosure isn't limited thereto. In the following, examples will be described using the scanning device 154 and the first coating device 155.

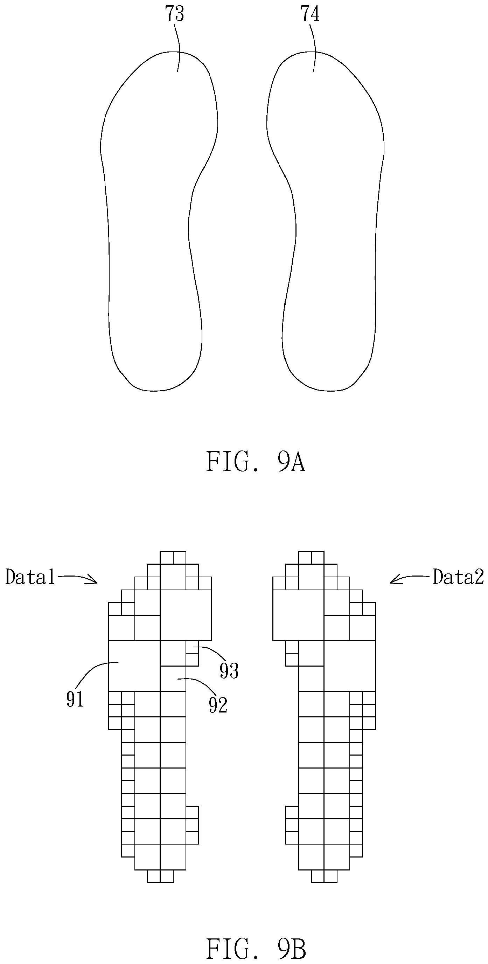

FIG. 9A is a vertical diagram of the upper in the embodiment of the present disclosure; FIG. 9B is a diagram of the three-dimensional structure data of the upper of FIG. 9A. Please refer to FIG. 9A, herein the surfaces 73 and 74, for example, may be a lower surface configured to bind the upper to the sole. In particular, for example, they may be midsoles of an upper of the present embodiment. After the surfaces 73 and 74 are scanned by the scanning device 154, the three-dimensional structure data may be obtained. The three-dimensional structure data of the present embodiment, for example, may be formed by Structured Light, that is, it is formed by sequentially scanning with laser of different sizes. The light spots of different sizes will be formed in the three-dimensional structure data based on the pixels of different sizes. The scanning results obtained by laser beam of three different sizes are taken as examples in the following sentences, but the present disclosure isn't limited thereto. In particular, when the scanning device 154 scans the surface 73 with the widest light beam, for example, the scanning result formed by the pixel 91 may be obtained; when the scanning device 154 scans the surface 73 with the second widest light beam, for example, the scanning result formed by the pixel 92 may be obtained; when the scanning device 154 scans the surface 73 with the narrowest light beam, for example, the scanning result formed by the pixel 93 may be obtained. Through the abovementioned method, the scanning method used in the present embodiment may obtain the three-dimensional structure data Data1 according to the surface 73 and may obtain the three-dimensional structure data Data2 according to the surface 74.

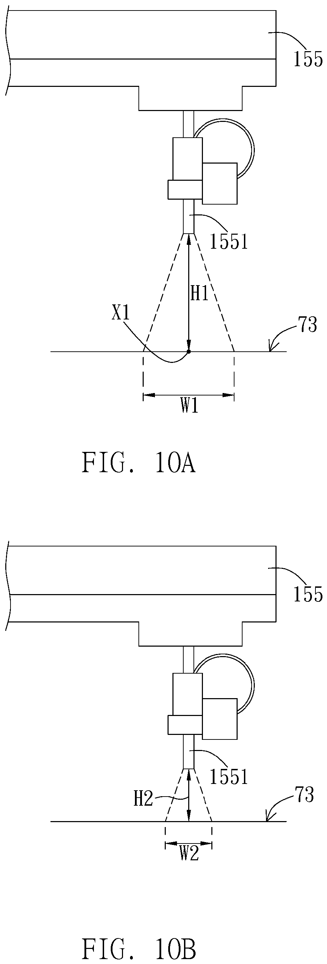

Based on the three-dimensional structure data Data1 and Data2, the coating method of the present embodiment may directly determine a coating path. The coating method in the present embodiment moves the position of the nozzle relative to the surface of the object according to the positions of the pixels. FIG. 10A and 10B are diagrams of an embodiment of the coating device spraying a surface. Please refer to FIG. 10A. The processing device may immediately decide the position of a nozzle 1551 of the first coating device 155 according to the position of the pixels in the three-dimensional structure data Data1 and Data2. Such position is preferably a center position, which makes the nozzle 1551 of the first coating device 155 face a position X1 on the surface 73 to which one of the pixels corresponds.

The coating method of the present embodiment may decide the distance between the nozzle 1551 and the surface 73 of the object according to the size of the pixels. Please refer to FIG. 10A. In particular, when the pixel area is larger, the distance between the nozzle 1551 and the surface 73 of the object H1 may be increased, and the surface 73 is coated with the larger width W1. Please refer to FIG. 10B. When pixel area is smaller, the distance between the nozzle 1551 and the surface 73 of the object may be decreased, and the surface 73 is coated with the narrower width W2. In other words, when the three-dimensional structure data Data1 is obtained through the abovementioned scanning device, the coating method of the present embodiment also decides a nozzle path of the coating device at the same time, and the process of calculating the large amount of path is eliminated.

In particular, in the coating method of the present embodiment, the processing unit of the first coating device 155 itself or the processing unit connected to the first coating device 155 may first determine a default distance according to the depth data of the three-dimensional structure data, and set a default value to compare with the size of the pixels. When the coating path is modified according to the three-dimensional structure data, if the pixel size of the three-dimensional data is larger than the default value, the distance between the position of the nozzle corresponding to the pixel and the surface is increased; if the pixel size of the three-dimensional data is smaller than the default value, the distance between the position of the nozzle corresponding to the pixel and the surface is decreased. Through the abovementioned modification method, the coating method in the present embodiment may efficiently decide the coating path.

On the other hand, the length of time of the nozzle 1551 spraying the surface 73 of the object may also be decided according to the pixel size. Please refer to FIG. 10A. When the pixel size is larger, the first coating device 155 generates a command of a longer coating time corresponding to the pixel; when the pixel size is smaller, the first coating device 155 generates the command of a shorter coating time corresponding to the pixel. Through the abovementioned method, the coating method in the present embodiment not only may efficiently generate a moving path of the nozzle 1551 of the first coating device 155, but also may uniformly coat the surface 73.

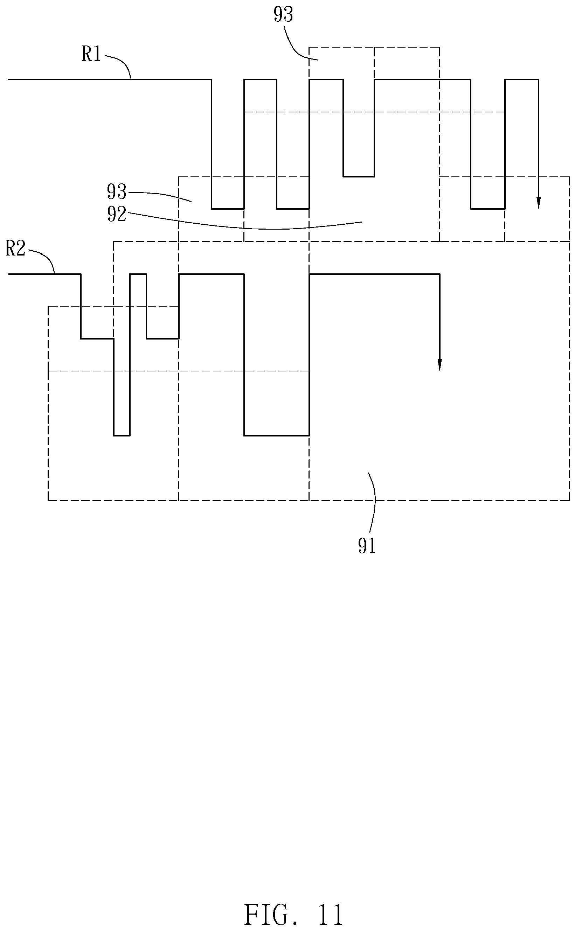

The coating method of the present embodiment may further quickly generate an efficient moving path according to the position of the pixels in the three-dimensional structure data. FIG. 11 is a diagram of the pixel and the coating path in the embodiment of the present disclosure. In particular, please refer to FIG. 11. The processing unit connected to the first coating device 155 may move the nozzle of the first coating device 155 according to paths R1, R2 calculated based on the positions of the pixels 91, 92, and 93 in the three-dimensional structure data, preferably, based on the center positions of the pixels 91, 92, and 93 in the three-dimensional structure data. Furthermore, the first coating device 155 of the present embodiment and the processing unit connected to it may further respectively set the corresponding moving path according to the arrangement of the pixels 91, 92, 93.

Taking the present embodiment as an example, a rectangular range in which the two largest pixels 91 are arranged vertically is taken as a unit. All of the arrangement patterns of the pixels 91, 92, and 93 in the rectangular range are limited. A fixed moving path may be recorded for each of the arrangement, and the coating paths of the whole surface are put together as a table, so that an efficient coating method is provided.

The coating method and the coating device in the embodiment of the present disclosure are not limited to being used with coating treating agents. In another embodiment, they may be further applied to adhesives, spray paint, etc., and the present disclosure isn't limited thereto.

In summary, the shoemaking system and the shoemaking method in the embodiment of the present disclosure may automatically produce the designed shoes according to the requirements of each users, automatically provides the purchase data to the user according to each of the shoe design data, and allows the user to select the most suitable method according to the requirements to complete the production of the designed shoes. The shoemaking system and the shoemaking method in the embodiment of the present disclosure may also produce the designed shoes by incorporating the method of crowdfunding or group purchase, wherein the user may purchase the designed shoes through customization or large lots of group purchase. The shoemaking system and the shoemaking method in the embodiment of the present disclosure may further track the progress of delivery with the tracking tag, and automatically ensure that the user receives the completed designed shoes.

## Claims

1. A shoemaking method, comprising:
obtaining shoes design data from a user through Internet or Internet of Things;
providing purchase data to the user according to the shoes design data;
producing at least one pair of designed shoes according to the shoes design data when obtaining an order data from the user;
providing the pair of designed shoes with a tracking tag, the tracking tag corresponding to tracking information; and
while the tracking tag is scanned by a scanning device connected to Internet or Internet of Things, the scanning device uploading the tracking information through Internet or Internet of Things.

2. The shoemaking method according to claim 1, wherein the tracking tag comprises barcode data or a radio frequency identification element; the barcode data or the radio frequency identification element corresponds to the tracking information.

3. The shoemaking method according to claim 1, wherein the purchase data comprises an estimated fee of production and an estimated time of production.

4. The shoemaking method according to claim 3, wherein the step of providing the purchase data comprises:
calculating the estimated time of production based on a quantity of materials in a stock database.

5. The shoemaking method according to claim 1, wherein the purchase data comprises a production cost of group purchase, a production quantity of group purchase, and a production time of group purchase;
the step of obtaining the order data from the user comprises:
obtaining a confirmation message of group purchase from the user;
uploading the shoes design data to a digital tally platform, the digital tally platform gathers an order quantity from the user and at least one participant;
when the order quantity exceeds the production quantity of group purchase, providing the order data, and producing the pair of designed shoes according to the order quantity.

6. The shoemaking method according to claim 5, wherein the digital tally platform is a social networking site or a group purchase website.

7. The shoemaking method according to claim 1, before the user providing the shoes design data, further comprising:
displaying a try-on image to the user by a virtual device, the try-on image corresponding to the shoes design data.

8. The shoemaking method according to claim 1, wherein the shoes design data comprises upper data, sole data, and shoe size data.

9. The shoemaking method according to claim 1, after the step of obtaining the shoes design data, further comprising:
comparing the shoes design data to data of a plurality of existing shoes in a shoes database;
when the shoes design data is similar to the data of at least one of the existing shoes, providing the data of the at least one of the existing shoes to the user;
after obtaining the order data from the user, producing the at least one pair of designed shoes according to the data of the at least one of the existing shoes.

10. A shoemaking system, comprising:
a communication unit configured to obtain shoes design data from a user through Internet or Internet of Things;
a processing unit connected to the communication unit;
a storage unit, the processing unit generating a purchase data according to the shoes design data and a shoes database of the storage unit, wherein the purchase data is provided to the user by the communication unit; and
a shoemaking device connected to the processing unit, wherein when the communication unit obtains an order data from the user, the processing unit transmits the shoes design data to the shoemaking system, the shoemaking device produces at least one pair of designed shoes according to the shoes design data, and the processing unit generates a tracking tag corresponding to the pair of designed shoes; the tracking tag corresponds to a tracking information;
while the user receives the pair of designed shoes, scans the tracking tag by a scanning device, and uploads the tracking information, the communication unit obtains the tracking information.

11. The shoemaking system according to claim 10, wherein the tracking tag comprises barcode data or a radio frequency identification element; the barcode data or the radio frequency identification element corresponds to the tracking information.

12. The shoemaking system according to claim 10, wherein the purchase data comprises an estimated fee of production and an estimated time of production.

13. The shoemaking system according to claim 12, wherein the processing unit calculates the estimated time of production of the shoes design data based on a quantity of materials in a stock database.

14. The shoemaking system according to claim 10, wherein the purchase data comprises a production cost of group purchase, a production quantity of group purchase, and a production time of group purchase;
the communication unit obtains a confirmation message of group purchase data from the user;
the processing unit uploads the shoes design data to a digital tally platform through the communication unit, and the digital tally platform gathers an order quantity from the user and at least one participant;
when the order quantity exceeds the production quantity of group purchase, the processing unit provides the order quantity and the shoes design data to the shoemaking device according to the order data;
the shoemaking device produces the pair of designed shoes according to the shoes design data and the order quantity.

15. The shoemaking system according to claim 14, wherein the digital tally platform is a social networking site or a group purchase website.

16. The shoemaking system according to claim 10, further comprising:
a virtual device configured to display a try-on image to the user, the try-on image corresponding to the shoes design data.

17. The shoemaking system according to claim 10, wherein the shoes design data comprises upper data, sole data, and shoe size data.

18. The shoemaking system according to claim 10, wherein when the processing unit obtains the shoes design data, the processing unit compares the shoes design data to data of a plurality of existing shoes in the shoes database of the storage unit;
when the shoes design data is similar to the data of at least one of the existing shoes, the processing unit provides the data of the at least one of the existing shoes to the user through the communication unit;
after obtaining the order data from the user, the shoemaking device produces at least one pair of the designed shoes according to the data of the at least one of the existing shoes.
